# EUROPÄISCHE PATENTSCHRIFT

(11) **EP 4 043 187 B1**
(45) Veröffentlichungstag und Bekanntmachung des Hinweises auf die Patenterteilung: **19.07.2023**
(21) Anmeldenummer: 22165213.4
(22) Anmeldetag: 16.03.2018
(51) Int. Cl.: B29C 64/321, B29C 64/124, B33Y 30/00

(54) **STEREOLITHOGRAPHIEGERÄT-MATERIALBEREITSTELLUNGSVORRICHTUNG**
STEREOLITHOGRAPHIC MATERIAL PROVIDING APPARATUS
DISPOSITIF DE FOURNITURE DE MATÉRIAU POUR UN APPAREIL DE STÉRÉOLITHOGRAPHIE

(43) Veröffentlichungstag der Anmeldung: 17.08.2022
(62) Teilanmeldung aus: 18162320.8
(73) Patentinhaber: Ivoclar Vivadent AG, 9494 Schaan (LI)
(72) Erfinder: Pokorny, Walter, 6719 Bludesch (AT); Ebert, Joerg, 9470 Buchs (CH); Lorünser, Johannes, 6700 Bludenz (AT)
(74) Vertreter: Baldus, Oliver

(56) Entgegenhaltungen:
- EP-A2- 1 950 032

## Beschreibung

Die Erfindung betrifft eine Materialbereitstellungsvorrichtung, gemäß dem Oberbegriff von Anspruch 1 bzw. ein Stereolithografiegeräte gemäß Anspruch 20.

Rapid-Prototyping-Verfahren werden in zunehmendem Maße angewandt, um basierend auf CAD/CAM-Daten Bauteile rasch und mit hoher Präzision zu fertigen. Unter den bekannten Verfahren ragt das Stereolithografieverfahren heraus, das insbesondere im Bereich der Dentaltechnik verwendet wird und weiterverwendet werden kann. In an sich bekannter Weise wird das betreffende Bauteil aus einer Flüssigkeit, dem Druckmaterial, unter Belichtung von bestimmten Strukturen schichtweise aufgebaut.

Die Schichtstärke liegt hierbei zwischen 0,05 und 0,25mm was entsprechend hohen Anforderungen an den Antrieb der Bauplattform beziehungsweise auch an die Bereitstellung des Druckmaterial-Bades stellt.

Andererseits sind unterschiedliche Strukturen für die Herstellung unterschiedlicher Bauteile erforderlich. Allein von der Farbwahl her ist es günstig, auf unterschiedliche Druckmaterialien zurückgreifen zu können.

Daher ist es bereits vorgeschlagen worden, mit beweglichen Wannen zu arbeiten, die je ein Druckmaterial der je gewünschten Farbe aufnehmen, und die erwünschte Wanne mit der entsprechend erwünschten Farbe des Druckmaterials in den aktiven Bereich, also in den Bereich, in dem das Bauteil hergestellt wird, zu verfahren.

Nachdem die verwendeten Druckmaterialien typischerweise lichtempfindlich sind, hat man die Wannen mit einem geeigneten Deckel oder einer sonstigen Abdeckung versehen, um ein vorzeitiges Austrocknen des Druckmaterials zu vermeiden.

Diese Lösung ist jedoch nicht befriedigend, da die Handhabung der Wannen häufig zu Verlusten an Druckermaterial und auch zu Verunreinigungen der Umgebung führt oder zumindest führen kann, wobei auch Verwechslungen nicht ausgeschlossen sind.

Aus der WO 2010/45951 A1 ist ein weiteres Stereolithographieverfahren bekannt, bei dem unter anderem eine Wanne und eine Kartusche eingesetzt werden. Nachteilig ist die geringe Flexibilität des Verfahrens insbesondere beim Wechsel des Druckmaterials.

EP 1950032 A2 offenbart die Merkmale gemäß dem Oberbegriff des Anspruchs 1.

Demgegenüber liegt der Erfindung die Aufgabe zugrunde, eine Materialbereitstellungsvorrichtung gemäß dem Oberbegriff von Anspruch 1 bzw. ein Stereolithografiegeräte gemäß Anspruch 20 zu schaffen, die eine universellere Verwendung des betreffenden Stereolithografiegeräts ermöglicht, und zudem bedienungssicher ist.

Diese Aufgabe wird erfindungsgemäß durch Anspruch 1 bzw. 20 gelöst. Vorteilhafte Weiterbildungen ergeben sich aus den Unteransprüchen.

Erfindungsgemäß ist eine Materialbereitstellungsvorrichtung mit einer Materialkartusche vorgesehen, die auch als Kassette bezeichnet werden kann und die allseitig geschlossen ist. Durch die geschlossene Ausgestaltung wird eine lichtdichte Materialbereitstellungsvorrichtung geschaffen, unabhängig davon, ob die Kartusche in der Materialbereitstellungsvorrichtung angeordnet ist oder nicht.

Die Materialbereitstellungsvorrichtung umfasst insofern einen Aufnahmerahmen, der öffenbar ist und, insbesondere lichtdicht, verschließbar ist. In diesem kann die erfindungsgemäße insbesondere flaschenförmige Materialkartusche eingesetzt werden. Diese nimmt ihrerseits das Druckmaterial auf und ist so ausgestaltet, dass das Druckmaterial für die Rapid-Prototyping-Vorrichtung, insbesondere das Stereolithographiegerät, abgegeben werden kann.

Erfindungsgemäß weist die Materialbereitstellungs-Vorrichtung eine besondere Materialkartusche mit einer Auslass-Ventileinheit auf. Über die Auslass-Ventileinheit wird bei Bedarf Druckmaterial aus der Kartusche abgegeben. Ob Material abgegeben werden kann oder nicht, hängt von der Relativposition der Materialbereitstellungsvorrichtung zum Stereolithographiegerät im übrigen ab.

In vorteilhafter Ausgestaltung ist das Ventil geöffnet, wenn die Material-Kartusche sich oberhalb der Auslass-Ventileinheit befindet und geschlossen, wenn sie sich seitlich der Ventileinheit befindet.

Die Material-Kartusche ist bevorzugt als Flasche ausgebildet. An deren Anschluss, beispielsweise einem Schraubanschluss, lässt sich die Auslassventil-Einheit montieren.

Wenn die Material Kartusche in die vertikale Position geschwenkt wird, in welcher sie sich mit dem Auslass nach unten erstreckt, wird durch diese Bewegung des mit der Material-Kartusche verbundenen Teils der Ventileinheit das Ventil geöffnet.

In dieser Position besteht insofern eine Strömungsverbindung aus der Material-Kartusche bis zum Auslass der Auslass-Ventileinheit. Diese mündet in der Wanne für die Aufnahme des Druckmaterials, so dass Material aus der Flasche in die Wanne fließen kann.

Wenn die Material-Kartusche seitlich nach unten geschwenkt wird, so dass sie sich im Wesentlichen horizontal erstreckt, wird hiermit zugleich der mit dem Auslass der Flasche verbundene Teil der Ventileinheit mit verschwenkt. Diese Bewegung schließt das Ventil.

In vorteilhafter Ausgestaltung ist es vorgesehen, dass sich die Auslass-Ventileinheit in dieser Stellung aus dem Aufnahmerahmen der Materialbereitstellungs-Vorrichtung entnehmen lässt. Hierzu ist eine Schiebeführung vorgesehen, die eine Entnahme des betreffenden Teils der Ventileinheit nach oben ermöglicht.

In dieser Position kann die Flasche zusammen mit der Ventileinheit gegen eine neue Flasche getauscht werden. Hierzu kann entweder eine neue Auslass-Ventileinheit auf die neue Flasche aufgeschraubt werden, oder es wird die bislang vorhandene abgeschraubt und auf die neue Flasche aufgeschraubt.

Erfindungsgemäß ist es günstig, wenn ein Gelenk vorgesehen ist, dass in die Auslass-Ventileinheit integriert ist und diese in zwei Teile teilt, die über das Gelenk schwenkbeweglich miteinander verbunden sind.

Ein erstes Gelenkteil weist bevorzugt einen Anschluss für die Materialkartusche auf. Wenn diese als Flasche ausgebildet ist, weist sie einen Flaschenhals oder Flaschen-Auslass auf. Dieser kann ein Außengewinde tragen, und der erste Gelenkteil ist dann dort aufschraubbar.

Es versteht sich, dass anstelle des Schraubanschlusses dort auch eine beliebige anderer Verbindung realisierbar ist, beispielsweise ein Bajonettverbindung.

Der andere Gelenkteil ist bevorzugt so ausgebildet und, dass der Anschluss an die Materialbereitstellungsvorrichtung im übrigen sichergestellt ist.

Bevorzugt weist der zweite Gelenkteile hierfür eine Schiebeführung auf, beispielsweise eine seitlich vorspringende Feder, die in eine entsprechende Nut an dem Aufnahmerahmen der Materialbereitstellungsvorrichtung einschiebbar ist.

Das erfindungsgemäße Gelenk erlaubt ein Verschwenken der Materialkartusche bezogen auf den Aufnahmerahmen um 90 Grad. In einer aufrechten Position ist die Materialkartusche kopfüber abgestützt und das Ventil geöffnet.

In der liegenden Position erstreckt sich die Materialkartusche seitlich des Gelenks und der Auslass-Ventileinheit und das Ventil ist geschlossen.

In der liegenden Position der Materialkartusche ist die vorstehend genannte Schiebeführung zugänglich, so dass die Materialkartusche samt Auslass-Ventileinheit entnehmbar ist und eine neue Materialkartusche mit der Auslass-Ventileinheit einsetzbar ist.

Demgegenüber ist in der aufrechten Position der Materialkartusche die Schiebeführung gesperrt, so dass bei geöffnetem Ventil nicht versehentlich die Material-kartusche herausgezogen werden kann, was zu Verunreinigungen des Stereolithografiegeräts führen würde.

Der zweite Gelenkteil erstreckt sich nach der Art eines Rohres nach unten. Dieses Rohr stellt den Auslass der Auslass-Ventileinheit dar und mündet in der Wanne.

Bei Realisierung der Rapid-Prototyping-Vorrichtung als Stereolithografiegerät ist wie vorstehend erläutert eine Wanne vorgesehen, in die das Druckmaterial aus der Materialkartusche abgegeben werden kann. Die Materialkartusche weist hierzu erfindungsgemäß die Auslass-Ventileinheit mit einem Ventil auf. Diese ist so gestaltet, dass dort abgegebenes Druckmaterial unmittelbar in die Wanne abgegeben wird.

Der Auslass der Auslass-Ventileinheit ist bevorzugt in einer solchen Länge ausgebildet, dass er am gewünschten Flüssigkeitsspiegel des Druckmaterials in der Wanne endet.

Der Flüssigkeitsspiegel des Druckmaterials in der Wanne ist selbstnivellierend, wie es z.B. von Viehtränken bekannt ist: Sobald der Flüssigkeitsspiegel unter das untere Ende des Auslasses sinkt, vermag dort Luft durch den Auslass und die Auslass-Ventileinheit in die Materialkartusche einzudringen, so dass Druckmaterial nachfließen kann.

Anstelle dessen kann auch eine beliebige andere selbstregulierende Vorrichtung der Flüssigkeitspegel in der Wanne konstant halten: Beispielsweise sei ein an sich bekanntes Schwimmerventil erwähnt, wobei die vorstehende Viehtränkenregelung demgegenüber bevorzugt ist, da sie kreuzkontaminationsfester ist.

In vorteilhafter Ausgestaltung ist es möglich, das Druckmaterial bei Bedarf in die Materialkartusche zurückzusaugen. Durch die Schwerkraft und/oder hydrostatische Effekte fließt Druckmaterial aus aus der Materialkartusche heraus, so dass die Wanne stets ausreichend gefüllt ist.

Besonders günstig ist es, dass erfindungsgemäß eine 1-zu-1-Zuordnung zwischen der Materialkartusche und der Wanne realisiert ist. Dies kann beispielsweise durch eine entsprechende Kodierung wie eine mechanische Kodierung sichergestellt sein. Die Kombination aus Wanne und Materialkartusche hat dann das gleiche Druckmaterial, vorausgesetzt die Kodierung erfolgt materialspezifisch.

Unter materialspezifisch sei hier sowohl die Art des verwendeten Druckmaterials, also die chemische Zusammensetzung, als auch andere Eigenschaften des Druckmaterials, wie beispielsweise die Farbe des Druckmaterials zu verstehen.

In vorteilhafter Ausgestaltung ist die räumliche Zuordnung zwischen Materialkartusche und Wanne so realisiert, dass die Fluidverbindung zwischen Materialkartusche und Wanne unabhängig von dem Zustand der Wanne gegeben ist.

Der erwünschte Flüssigkeitsspiegel des Druckmaterials in der Wanne ist unabhängig von dem Zustand, also auch beim Bauen des zu erzeugenden Formteils, gewährleistet, da der Auslass der Auslass-Ventileinheit in die Wanne hineinragt und deren Flüssigkeitsspiegel nivelliert.

Hierfür ist es günstig, dass der Auslass exakt horizontal endet, und das Stereolithegraphiegerät exakt horizontal aufgestellt ist.

Für die Realisierung eines Stereolithographiegeräts ist es erforderlich, eine genaue Referenzhöhe beim Schichtaufbau bereitzustellen. Hierzu dient erfindungsgemäß ein transparentes Supportfenster, welches als eine Glasplatte ausgebildet sein kann, deren Oberseite als Referenzhöhe verwendet wird. Die Glasplatte dient als Basis für eine Folie, die unten an der Wanne vorgesehen ist. Die Folie wird über die Glasplatte gespannt, so dass sich unabhängig von Führungsungenauigkeiten bei der Wanne stets eine exakte Referenzhöhe ergibt.

In der praktischen Anwendung wird insofern die Materialbereitstellungsvorrichtung zunächst einschließlich Materialkartusche und Wanne in das Stereolithografiegerät eingesetzt.

Gemäß einer alternativen Ausgestaltung kann es auch vorgesehen sein, dass die Glasplatte hierzu auf eine gewünschte und vorgegebene Höhe, die die Referenzhöhe bildet, eingestellt wird.

Zu diesem Zeitpunkt, also wenn die Glasplatte mit der Folie Kontakt hat, erfolgt ein Befüllen der Wanne, aber nur dann, wenn dies erforderlich ist, also wenn die Wanne nicht bereits vorher befüllt ist. Dies kann beispielsweise durch Öffnen des Ventils realisiert sein.

In einer anderen Ausführungsform lässt sich der Füllstandspiegel regeln, basierend auf dem Ausgangssignal eines Sensors, der die Höhe des Füllstandspiegels erfasst.

Erfindungsgemäß ist es günstig, wenn bei einem Materialwechsel die Zuordung zwischen Materialkartusche und Wanne bestehen bleibt. Dies ist mit der richtigen Kodierung sichergestellt. Die Materialbereitstellungsvorrichtung kann dem Stereolithographiegerät entnommen und an eine Lagerstelle verbracht werden. Wenn die Materialkartusche leer ist, lässt sie sich lediglich durch eine Materialkartusche ersetzen, die das exakt gleiche Material aufweist. Dies ist durch die Kodierung sichergestellt, da eine Materialkartusche mit einem anderen Druckmaterial dann nicht einsetzbar ist, aufgrund der mechanisch wirkenden Kodierung für die Zuordnung zwischen Materialkartuschen und Wanne.

Grundsätzlich ist auch die Wanne austauschbar, aber wiederum nur aufgrund ihrer Kodierung nur, wenn ihre Kodierung zu der Kodierung der Materialkartusche passt. Der übrige Teil der Materialbereitstellungsvorrichtung, also der Aufnahmerahmen, ist grundsätzlich wiederverwendbar und ist insofern ein Mehrwegteil. Dies gilt für alle Teile der Materialbereitstellungsvorrichtung, mit Ausnahme der Materialkartusche. Diese ist als Einwegteil ausgebildet. Der Materialaufwand für die Materialkartusche selbst ist jedoch sehr begrenzt, zumal sie als einfache Flasche ausgebildet sein kann.

Die Wanne selbst ist an sich ein Mehrwegteil. Jedoch ist die Lebensdauer der Bodenfolie begrenzt, so dass diese z.B. nach 5000 oder 10000 Ablösevorgängen, alos einer entsprechenden Anzahl an Bauschritten, ersetzt werden sollte.

Die Materialbereitstellungsvorrichtung mit eingesetzter Materialkartusche ist vollständig geschlossen und dicht. Solange die Wanne nicht gefüllt und das Ventil in der Schließstellung ist, lässt sie sich in beliebiger Weise lagern, also auch auf den Kopf stellen. Durch eine mechanische Sperre ist sichergestellt, dass die Materialkartusche mit der Auslass-Ventileinheit lediglich dann entnommen werden kann, wenn die die Materialkartusche sich in der horizontalen Schwenkstellung befindet, also in den Zustand, in dem sie in die Materialbereitstellungsvorrichtung aufgenommen worden ist.

Der Auslass reicht bevorzugt in die Wanne hinein.

In vorteilhafter Ausgestaltung ist es vorgesehen, dass unterhalb der Wanne ein transparentes Supportfenster, insbesondere eine Glasplatte, angeordnet ist, und eine Folie der Wanne spannbar über diese ist. Die Oberseite der Glasplatte plus die Stärke der Folie ergibt dann die Referenzhöhe beim Bauen oder Slicen im Rahmen des Stereolithographieverfahrens.

In einer weiteren Ausgestaltung der Wanne ist es vorgesehen, dass diese mit einem Sieb an eine Ecke ausgestattet ist. Es ist auch möglich mehrere Siebe je an den Ecken der Wanne vorzusehen. In der Wanne verbliebenes restliches Druckmaterial lässt sich durch das Sieb ausgießen und gleichzeitig filtern, so dass Verunreinigungen zurückgehalten werden und das verbleibende Druckmaterial insofern recycled werden kann.

Das Druckmaterial wird dann bevorzugt in eine Wanne abgegeben, die die gleiche Kodierung aufweist, also für das gleiche Druckmaterial bestimmt ist. Das Sieb kann hierbei entweder fest mit der Wanne verbunden sein, oder separat von dieser gehandhabt werden. Die Maschenweite des Siebs lässt sich in weiten Bereichen an die Erfordernisse anpassen; bevorzugt beträgt die Maschenseite weniger als 500 µm, bevorzugt etwa 150 µm.

Erfindungsgemäß günstig ist es, dass die Materialbereitstellungsvorrichtung sich von oben öffnen lässt.

Dann liegt die Materialkartusche liegend frei und kann gewechselt werden. Hierzu wird die Materialkartusche kurzerhand mit der Auslass-Ventileinheit aus deren Schiebeführung herausgezogen und bei der neuen Materialkartusche das die Auslass-Ventileinheit aufgeschraubt. Ein Schließen der Materialbereitstellungsvorrichtung ist aufgrund der mechanischen Sperre nur im liegenden Zustand der Materialkartusche möglich.

Auch die Wanne lässt sich bei Bedarf austauschen, wobei hierzu beispielsweise eine Schnappverbindung vorgesehen ist, die für das Austauschen der Wanne überwindbar ist.

Anstelle des bevorzugten einfachen Ventils ist es möglich, bei Bedarf mehrere Ventile und entsprechende Ventilaufnahmen zu realisieren.

Weitere Vorteile, Einzelheiten und Merkmale ergeben sich aus der nachfolgenden Beschreibung mehrerer Ausführungsbeispiele der Erfindung anhand der Zeichnung.

Es zeigen:
- Fig. 1: eine schematische perspektivische Darstellung eines Teils einer erfindungsgemäßen Materialbereitstellungsvorrichtung in einer Ausführungsform, nämlich der Materialkartusche, des Aufnahmerahmens und der Wanne, in einer Ausführungsform der Erfindung;
- Fig. 2: die Ausführungsform gemäß Fig. 1, im Schnitt und in einer anderen Position der Materialkartusche;10
- Fig. 3: eine Schnittdarstellung gemäß Fig. 2, jedoch in der liegenden Position der Materialkartusche;
- Fig. 4: eine perspektivische Darstellung gemäß Fig. 1, wobei die Materialkartusche entfernt ist:
- Fig. 5: die Ausführungsform gemäß Fig. 4 wobei ein Teil der Materialkartusche ersichtlich ist:
- Fig. 6: eine schematische perspektivische Schnittansicht durch eine weitere Ausführungsform einer erfindungsgemäßen Materialbereitstellungsvorrichtung; und
- Fig. 7: die erfindungsgemäße Materialbereitstellungsvorrichtung in einer weiteren Ausführungsform, in Explosionsdarstellung.

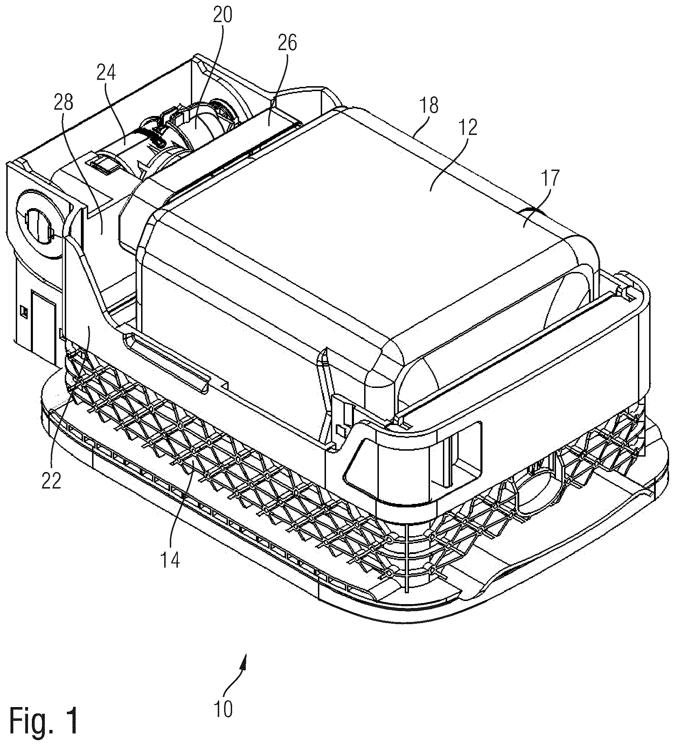

Aus Fig. 1 ist eine schematische perspektivische Darstellung einer erfindungsgemäßen Materialbereitstellungsvorrichtung 10 als Teil eines Stereolithographiegeräts ersichtlich.

Die Materialbereitstellungsvorrichtung 10 weist eine Materialkartusche 12 auf und eine Wanne 14 unterhalb dieser. Die Wanne 14 ist in an sich bekannter Weise für die Aufnahme von Druckmaterial bestimmt und weist einen transparenten Boden auf, auf dem eine ebenfalls transparente Folie aufliegt.

Wie ein bei einem Stereolithographie-Gerät üblich, erfolgt die Belichtung des Druckmaterials schichtweise von unten.

Die hier nicht dargestellte sogenannte Bauplattform wird schrittweise, beispielsweise mit einer Auflösung von 0,05 mm, angehoben, um den zu erzeugenden Gegenstand in die wünschte Form zu bringen. Die Materialkartusche weist eine Flasche 17 auf, die im Wesentlichen rechteckig mit abgerundeten Ecken 18 ist.

Ihre Abmessungen sind so gewählt, dass sie liegend in einen Aufnahmerahmen 22 passt, der sich oberhalb der Wanne 14 an diese anschließt und im Wesentlichen die gleiche flach-rechteckig Quaderform, ebenfalls mit abgerundeten Ecken, aufweist.

Die Materialkartusche 12 weist ferner eine Aufnahme-Ventileinheit 20 auf.

Die Aufnahme-Ventileinheit 20 weist ein Gelenk 24 auf, um das sie zwischen einem Schwenkteil 26 und einem Festteil 28 schwenkbar ist. Der Schwenkteil 26 ist mit der Flasche 17 verbunden, und zwar in abgedichtete Form.

Demgegenüber ist der Festteil 28 in den Aufnahmerahmen 22 eingesteckt und zwar so, dass keine Verunreinigungen durch Druckmaterial entstehen bzw. in Bereiche gelangen können, in denen sie unerwünscht sind.

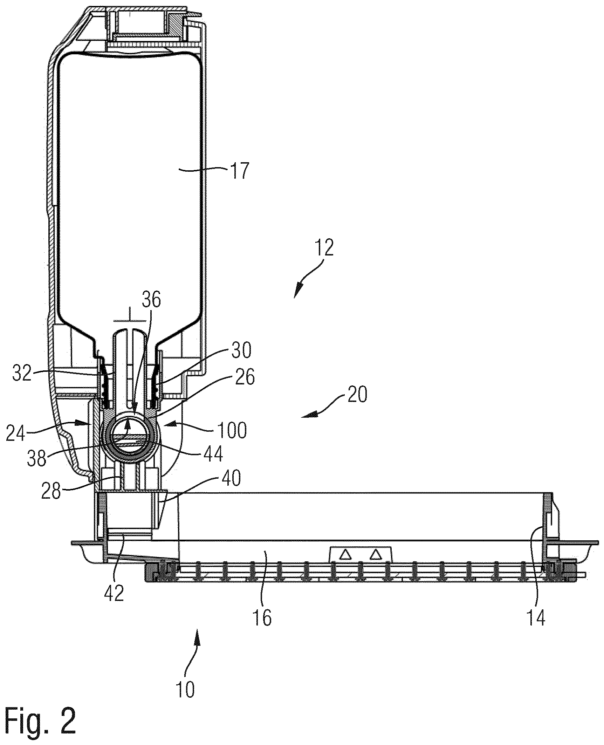

Aus Fig. 2 ist eine weitere Ausführungsform der erfindungsgemäßen Materialbereitstellungsvorrichtung 10 ersichtlich. Die Ausführungsform gemäß Fig. 2 unterscheidet sich nur in Details von der gemäß Fig. 1. Wie aus Fig. 2 ersichtlich ist, weist die Materialkartusche 12 neben der Flasche 17, der Aufnahme-Ventileinheit 20 ein Ventil 100 auf, das in der dargestellten Position der Materialkartusche 12 geöffnet ist.

Die Flasche 17 weist einen Schraubanschluss 30 auf, der in den Schwenkteil 26 der Aufnahme-Ventileinheit 20 eingeschraubt ist und an einer Dichtfläche 32 abdichtet.

Wie aus Fig. 2 ersichtlich ist, umgreift der Schwenkteil 26 teilweise den Festteil 28. Beide Teile weisen je eine Öffnung 36 und 38 auf. Wenn diese miteinander fluchten, wie es aus Fig. 2 ersichtlich ist, ist das Ventil 100 offen, und Druckmaterial kann aus der Flasche 17 herausströmen.

Der Festteil 28 weist einen speziell geformten Auslass 40 auf. Dieser endet nach unten mit einer nach unten weisenden Ringfläche 42, die sich dementsprechend horizontal erstreckt.

Der Auslass 40 und die Ringfläche 42 ragen in die Wanne 14 hinein.

Das aus der Flasche 17 durch die Schwerkraft heraus fließende Druckmaterial 16 vermag nur soweit auszuströmen, wie das Nachströmen von Luft möglich ist. Durch die plane Ringfläche 42 erfolgt eine Selbstnivellierung. Erst wenn der Flüssigkeitsspiegel in der Wanne 14 abgesunken ist, gelangt Luft durch die Ringfläche 42 in den Auslass 40 hinein und kann damit in die Flasche 17 aufsteigen.

Solange der Flüssigkeitsspiegel des Druckmaterials auf der Höhe der Ringfläche 42 oder höher ist, dichtet er gegen die Ringfläche 42 ab, so dass keine Luft in die Flasche 17 hinein und damit kein Druckmaterial aus der Flasche 17 ausströmen kann.

Dieses Prinzip kann auch als Viehtränken-Prinzip bezeichnet werden.

In Fig. 2 Ist auch ein Führungselement 44 dargestellt. Das Führungselement 44 ist mit dem Schwenkteil 30 verbunden und in der aufrechten Position der Flasche 17 waagerecht.

Der Aufnahmerahmen 22 weist eine hier nicht dargestellte Schiebeführung auf, die sich seitlich, also in der Darstellung gemäß Fig. 2 vor der Zeichnungsebene erstreckt und das Führungselement 44 aufnimmt. Die Schiebeführung erlaubt in einem unteren Bereich und das Verschwenken des Führungselement 44, ist oben jedoch schmaler.

Dementsprechend lässt sich das Führungselement 44 in der Position gemäß Fig. 2 nicht durch die Schiebeführung hindurchführen, so dass die Entnahme der Materialkartusche 16 in deren aufrechter Stellung blockiert ist

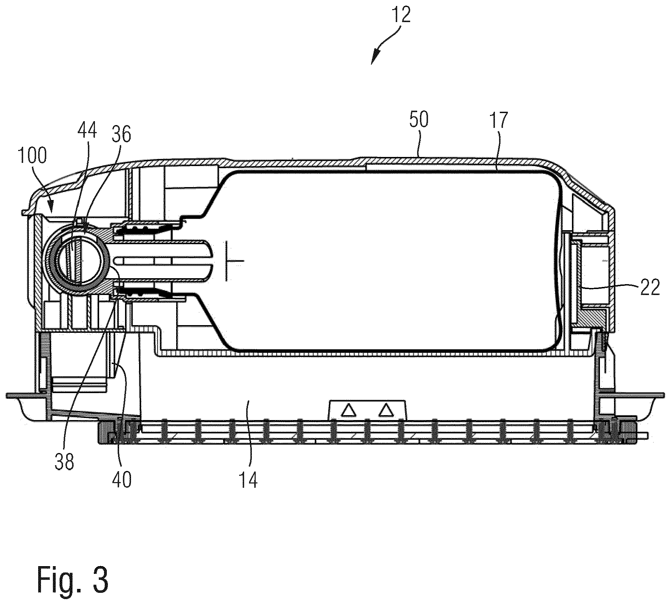

Wie aus Fig. 3 ersichtlich ist, lässt sich die Materialkartusche 12 um das Gelenk 28 verschwenken, aus der aufrechten Position gemäß Fig. 2 in die liegende gemäß Fig. 3. In dieser Position erstreckt sich das Führungselement 44 senkrecht und passt durch die Führungsschiene hindurch, so dass eine Entnahme der Materialkartusche 12 möglich ist.

Dementsprechend lässt sich die Flasche 17 in der Position gemäß Fig. 3 entnehmen und nach Lösen der Schraubverbindung beim Schraubanschluss 30 durch eine neue Flasche 17 ersetzen.

In der Position gemäß Fig. 3 ist zudem die Öffnung 36 gegenüber der Öffnung 38 versetzt. Dies führt dazu, dass das Ventil 100 in der Position gemäß Fig. 3 geschlossen ist, so dass das in der Flasche 17 aufgenommene Druckmaterial nicht aus dem Auslass 40 ausfließen kann.

Wie aus Fig. 3 ersichtlich ist, weist der Aufnahmerahmen 22 eine Abdeckung 50 auf. Die Abdeckung 50 nimmt die Flasche 17 lichtdicht auf und lässt sich bei Bedarf entfernen, um einen Flaschenwechsel zu ermöglichen.

Aus Fig. 3 ist darüber hinaus zu ersehen, dass der Aufnahmerahmen 22 die Wanne 14 oben vollständig abdeckt. Etwaiges dort befindliches Druckmaterial wird daher bereits durch den Aufnahmerahmen 22 vor Lichteintritt geschützt.

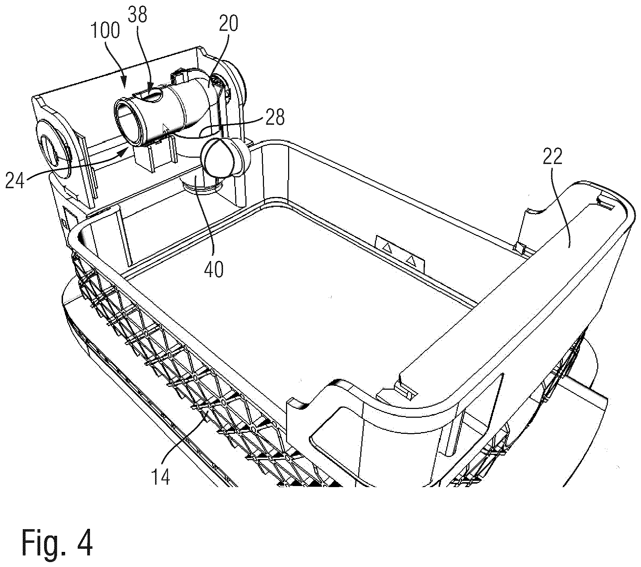

Aus Fig. 4 ist eine perspektivische Darstellung des Aufnahmerahmens 22 in Teilen sowie der Wanne 14 ersichtlich. Von der Materialkartusche 12 ist lediglich ein Teil der Auslassventileinheit 20 ersichtlich, nämlich das Ventil 100 mit der Öffnung 38 und dem Festteil 28.

Wie ersichtlich ist, erstreckt sich der Auslass 40 seitlich neben und unterhalb des Gelenks 24.

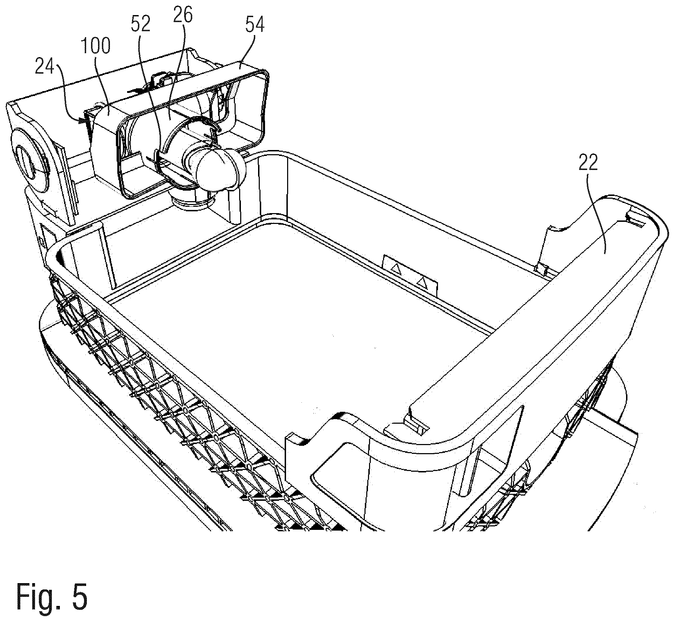

Wie aus Fig. 5 ersichtlich ist, umgreift der Schwenkteil 26 an dem Gelenk 24 den Festteil 28.

Wie ebenfalls aus Fig. 5 ersichtlich ist, weist der Schwenkteil 26 ein Innengewinde 52 auf, das zu dem Schraubanschluss 30 der in Fig. 5 nicht dargestellten Flasche 17 passt.

Der Schwenkteil 26 weist ferner einen Stützrahmen 54 auf, der der besseren seitlichen und vertikalen Abstützung der Flasche 17 dient.

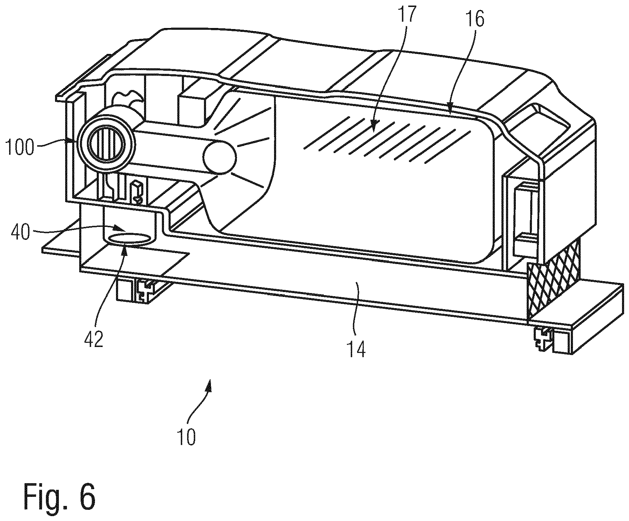

Fig. 6 zeigt eine weitere Ausführungsform der erfindungsgemäßen Materialbereitstellungsvorrichtung 10. Hier wie auch in den weiteren Figuren weisen gleiche Bezugszeichen auf gleiche oder ähnliche Teile hin.

Es ist ersichtlich, dass der Auslass 40 nach unten in die Wanne 14 hineinragt und, und mit der Planfläche 52 etwa auf der halben Höhe der Wanne 14 endet.

Gemäß Fig. 6 ist die Flasche 17 in der liegenden Position angeordnet. In dieser Position ist das Ventil 100 geschlossen.

Das in Fig. 6 schematisch dargestellte Druckmaterial 16 in der Flasche 17 kann nicht aus der Flasche ausfließen. In dieser Position kann die Flasche gewechselt werden.

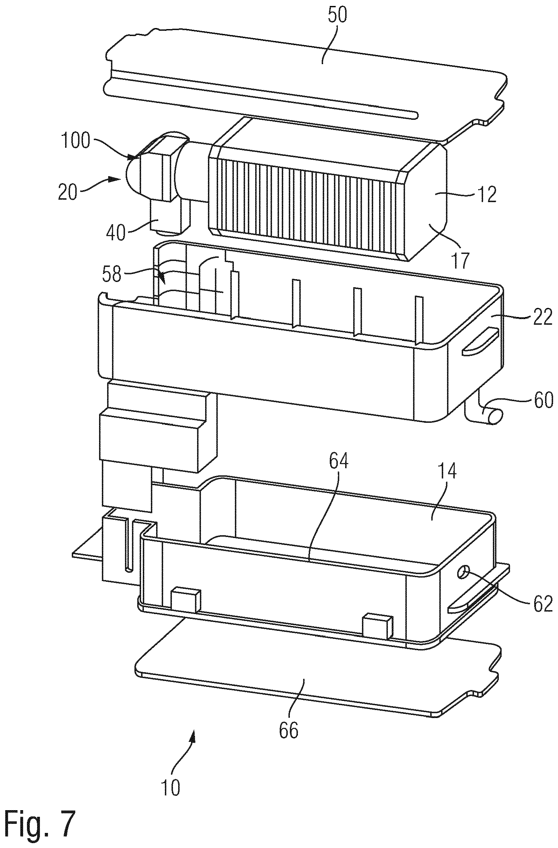

Aus Figur 7 ist ersichtlich, in welcher Weise die Einzelteile der Materialbereitstellungsvorrichtung 10 in dieser Ausführungsform einander zugeordnet sind.

In dieser Ausführungsform ist die Abdeckung 50 eine Art Deckel, der den Aufnahmerahmen 22 oben flach abschließt. Der Aufnahmerahmen 22 nimmt die Materialkartusche 12 auf, die aus der Flasche 17 und der Auslass-Ventileinheit 20 besteht. Das Ventil 100 in der Auslass-Ventileinheit 20 ist geschlossen. Nach unten ragt der Auslass 40 der Auslass-Ventileinheit 20 vor. Dieser ist in einer nur schematisch ersichtlichen Schiebeführung 58 in dem Aufnahmerahmen 22 einschiebbar.

Der Aufnahmerahmen 22 passt auf die Wanne 14 und lässt sich dort verriegeln. Hierzu ist ein Rastzapfen 60 vorgesehen, der in eine Rastausnehmungen 62 eingreift, wenn der Aufnahmerahmen 20 auf die Wanne 14 aufgesetzt ist.

Die Wanne 62 ist unten mit einer transparenten Folie 64 versehen, die in Betrieb auf einer Glasplatte 66 aufliegt.

## Patentansprüche

1. Stereolithographiegerät-Materialbereitstellungsvorrichtung für zu härtendes Druckmaterial (16), insbesondere ein Fotopolymer, wobei die Materialbereitstellungsvorrichtung (10) eine Materialkartusche (12) aufnimmt, die ihrerseits das Druckmaterial (16) aufnimmt und allseitig umgibt, dass die Materialkartusche (12) eine Auslass-Ventileinheit (20) aufweist, über welche das Druckmaterial (16) abgebbar ist und welche mindestens teilweise in der Materialbereitstellungsvorrichtung (10) aufgenommen ist und sich mindestens teilweise an dieser oder in dieser abstützt oder gegen diese abdichtet, **dadurch gekennzeichnet, dass** die Auslass-Ventileinheit (20) ein Ventil (100) aufweist, das in Abhängigkeit von der Schwenkposition von Materialbereitstellungsvorrichtung (10) und Stereolithographiegerät, öffnet und schließt.

2. Materialbereitstellungsvorrichtung nach Anspruch 1, **dadurch gekennzeichnet, dass** das Ventil (100) geöffnet ist, wenn sich die Materialkartusche (12) oberhalb der Auslass-Ventileinheit (20) befindet, und die Materialkartusche (12) seitlich nach unten schwenkbar ist.

3. Materialbereitstellungsvorrichtung nach Anspruch 1 oder 2, **dadurch gekennzeichnet, dass** das Ventil (100) in einer aufrechten Position der Materialkartusche (12) offen und in einer horizontalen Position geschlossen ist.

4. Materialbereitstellungsvorrichtung nach Anspruch 1, 2 oder 3, **dadurch gekennzeichnet, dass** das Ventil (100) ein Gelenk mit einem Schwenkwinkel von mind. 70 Grad, insbesondere 90 Grad, aufweist.

5. Materialbereitstellungsvorrichtung nach einem der vorhergehenden Ansprüche, **dadurch gekennzeichnet, dass** der mit dem Auslass der Materialkartusche verbundene Teil der Ventileinheit zusammen mit der Materialkartusche (12) verschwenkbar ist und diese Bewegung das Ventil (100) schließt.

6. Materialbereitstellungsvorrichtung nach einem der vorhergehenden Ansprüche, **dadurch gekennzeichnet, dass** in der aufrechten Position die Materialkartusche (12) kopfüber abgestützt und das Ventil (100) geöffnet ist.

7. Materialbereitstellungsvorrichtung nach einem der vorhergehenden Ansprüche, **dadurch gekennzeichnet, dass** die Materialkartusche (12) mit der Auslass-Ventileinheit (20) über eine Schiebeführung (58) entnehmbar ist und insbesondere, dass in der aufrechten Position der Materialkartusche (12) die Schiebeführung (58) gesperrt ist und ein Schließen der Materialbereitstellungsvorrichtung aufgrund der mechanischen Sperre nur im liegenden Zustand der Materialkartusche möglich ist.

8. Materialbereitstellungsvorrichtung nach einem der vorhergehenden Ansprüche, **dadurch gekennzeichnet, dass** die Materialbereitstellungsvorrichtung mit eingesetzter Materialkartusche (12) vollständig geschlossen und dicht ist.

9. Materialbereitstellungsvorrichtung nach einem der vorhergehenden Ansprüche, **dadurch gekennzeichnet, dass** der Auslass (20) in eine Wanne (14) mit flüssigem Druckmaterial (16) hineinragt und mit deren Flüssigkeitsspiegel zur Realisierung einer Selbstnivellierung abschließt

10. Materialbereitstellungsvorrichtung nach einem der vorhergehenden Ansprüche, **dadurch gekennzeichnet, dass** die Einführung und Entnahme der Materialkartusche (12) mit der Auslass-Ventileinheit (20) in und aus einem Rahmen (22) der Materialbereitstellungsvorrichtung (10) in der geöffneten Stellung des Ventils (100) gesperrt ist.

11. Materialbereitstellungsvorrichtung nach einem der vorhergehenden Ansprüche, **dadurch gekennzeichnet, dass** die Materialkartusche (12) und/oder die Wanne (14) als Einwegteil und einen Aufnahmerahmen der Materialbereitstellungsvorrichtung (10) als Mehrwegteil ausgebildet ist, wobei alle Teile je lichtdicht sind.

12. Materialbereitstellungsvorrichtung nach einem der vorhergehenden Ansprüche, **dadurch gekennzeichnet, dass** eine 1-zu-1-Zuordnung zwischen der Materialkartusche (12) und der Wanne (14) über eine entsprechende Kodierungrealisiert ist.

13. Materialbereitstellungsvorrichtung nach einem der vorhergehenden Ansprüche, **dadurch gekennzeichnet, dass** eine oder mehrere Wannen (14) vorgesehen sind, die je nach Wahl des Benutzers einsetzbar sind, wobei die Codierung an der Wanne (14) zu der Codierung an der Materialkartusche (12) passt und voneinander verschiedene Codierungen nicht zueinander passen.

14. Materialbereitstellungsvorrichtung nach einem der vorhergehenden Ansprüche, **dadurch gekennzeichnet, dass** der Füllstandspiegel basierend auf dem Ausgangssignal eines Sensors, der die Höhe des Füllstandspiegels erfasst, regelbar ist.

15. Materialbereitstellungsvorrichtung nach einem der vorhergehenden Ansprüche, **dadurch gekennzeichnet, dass** ein transparentes Supportfenster vorgesehen ist, deren Oberseite als Referenzhöhe verwendbar ist.

16. Materialbereitstellungsvorrichtung nach Anspruch 15, **dadurch gekennzeichnet, dass** die Glasplatte als Basis für eine Folie (64), die unten an der Wanne (14) vorgesehen und über die Glasplatte (66) gespannt ist, dient.

17. Materialbereitstellungsvorrichtung nach Anspruch 15 oder 16, **dadurch gekennzeichnet, dass** die Oberseite der Glasplatte (66) und die Stärke der Folie (64) die Referenzhöhe beim Bauen oder Slicen im Rahmen des Stereolithographieverfahrens ist.

18. Materialbereitstellungsvorrichtung nach einem der vorhergehenden Ansprüche, **dadurch gekennzeichnet, dass** wenn die Materialbereitstellungsvorrichtung von oben geöffnet ist und die Materialkartusche (12) frei liegt, die Materialkartusche (12) im liegenden Zustand wechselbar ist, indem sie mit der Auslass-Ventileinheit aus der Schiebführung herausziehbar ist.

19. Materialbereitstellungsvorrichtung nach einem der vorhergehenden Ansprüche, **dadurch gekennzeichnet, dass** der Auslass exakt horizontal endet, und das Stereolithographiegerät exakt horizontal aufgestellt ist.

20. Stereolithographiegerät mit Materialbereitstellungsvorrichtung, nach einem der vorhergehenden Ansprüche, wobei eine Materialbereitstellungsvorrichtung (10) des Geräts eine Materialkartusche (12) aufnimmt, die ihrerseits das Druckmaterial (16) aufnimmt und allseitig umgibt, dass eine Auslass-Ventileinheit (20) vorgesehen ist, über welche das Druckmaterial (16) abgebbar ist und welche mindestens teilweise in der Materialbereitstellungsvorrichtung (10) aufgenommen ist und sich mindestens teilweise an dieser oder in dieser abstützt oder gegen diese abdichtet, und dass die Auslass-Ventileinheit (20) ein Ventil (100) aufweist, das in Abhängigkeit von der Schwenkposition von Materialbereitstellungsvorrichtung (10) und Stereolithographiegerät, öffnet und schließt.

## Claims

1. A stereolithography apparatus material provision device for print material (16) to be cured, in particular a photopolymer, wherein the material provision device (10) receives a material cartridge (12) which in turn receives the print material (16) and surrounds it on all sides, wherein the material cartridge (12) comprises an outlet valve unit (20) via which the print material (16) may be output and which is received at least partially in the material provision device (10) and which is supported at least partially thereon or therein or sealed against it, **characterized in that** the outlet valve unit (20) comprises a valve (100) which is opened and closed depending on the swiveling position of the material provision device (10) and stereolithography apparatus.

2. The material provision device as claimed in claim 1, **characterized in that** the valve (100) is open, when the material cartridge (12) is positioned above the outlet valve unit (20), and the material cartridge (12) can be swiveled laterally to the bottom.

3. The material provision device as claimed in claim 1 or 2, **characterized in that** the valve (100) is open in a vertical position of the material cartridge (12) and closed in a horizontal position.

4. The material provision device as claimed in claims 1, 2 or 3, **characterized in that** the valve (100) comprises a joint having a swiveling angle of at least 70 degrees, in particular 90 degrees.

5. The material provision device as claimed in any of the preceding claims, **characterized in that** the part of the valve unit connected to the outlet of the material cartridge can be swiveled along with the material cartridge (12) and that this movement closes the valve (100).

6. The material provision device as claimed in any of the preceding claims, **characterized in that** in the vertical position the material cartridge (12) is supported upside down and the valve (100) is open.

7. The material provision device as claimed in any of the preceding claims, **characterized in that** the material cartridge (12) along with the outlet valve unit (20) is removable via a sliding guide (58) and in particular that in the vertical position of the material cartridge (12) the sliding guide (58) is blocked and closing of the material provision device is possible only in the horizontal state of the material cartridge because of the mechanical lock.

8. The material provision device as claimed in any of the preceding claims, **characterized in that** the material provision device is completely closed and sealed when the material cartridge (12) is inserted.

9. The material provision device as claimed in any of the preceding claims, **characterized in that** the outlet (20) protrudes into a trough (14) containing liquid print material (16) and ends with its liquid level to realize self-leveling.

10. The material provision device as claimed in any of the preceding claims, **characterized in that** insertion and removal of the material cartridge (12) together with the outlet valve unit (20) into and out of a frame (22) of the material provision device (10) is blocked in the open position of the valve (100).

11. The material provision device as claimed in any of the preceding claims, **characterized in that** the material cartridge (12) and/or the trough (14) is configured as a disposable part and a mounting frame of the material provision device (10) is configured as a reusable part, wherein all parts are lightproof.

12. The material provision device as claimed in any of the preceding claims, **characterized in that** a one-to-one mapping between the material cartridge (12) and the trough (14) is realized by a corresponding coding.

13. The material provision device as claimed in any of the preceding claims, **characterized in that** one or more troughs (14) are provided which are usable at the discretion of the user, wherein the coding at the trough (14) fits the coding at the material cartridge (12) and wherein codings different from one another do not fit one another.

14. The material provision device as claimed in any of the preceding claims, **characterized in that** the filling level is controllable based on the output signal of a sensor which detects the height of the filling level.

15. The material provision device as claimed in any of the preceding claims, **characterized in that** a transparent support window is provided whose upper side is usable as a reference height.

16. The material provision device as claimed in claim 15, **characterized in that** the glass plate serves as a base for a film (64) which is provided at the bottom of the trough (14) and is stretched across the glass plate (66).

17. The material provision device as claimed in claim 15 or 16, **characterized in that** the upper side of the glass plate (66) and the thickness of the film (64) are the reference height when constructing or slicing within the context of the stereolithography process.

18. The material provision device as claimed in any of the preceding claims, **characterized in that** when the material provision device is opened from above and the material cartridge (12) is exposed, the material cartridge (12) is exchangeable in the horizontal state by being pulled out of the sliding guide along with the outlet valve unit.

19. The material provision device as claimed in any of the preceding claims, **characterized in that** the outlet ends exactly horizontally and the stereolithography apparatus is positioned exactly horizontally.

20. A stereolithography apparatus with a material provision device, as claimed in any of the preceding claims, wherein a material provision device (10) of the apparatus receives a material cartridge (12) which in turn receives the print material (16) and surrounds it on all sides, wherein an outlet valve unit (20) is provided via which the print material (16) may be output and which is received at least partially in the material provision device (10) and which is supported at least partially thereon or therein or sealed against it, and wherein the outlet valve unit (20) comprises a valve (100) which is opened and closed depending on the swiveling position of the material provision device (10) and stereolithography apparatus.

## Revendications

1. Dispositif de mise à disposition de matériau pour appareil de stéréolithographie pour un matériau d'impression (16) à durcir, en particulier un photopolymère, où le dispositif de mise à disposition de matériau (10) reçoit une cartouche de matériau (12) qui, de son côté, reçoit le matériau d'impression (16) et l'entoure de tous côtés, où la cartouche de matériau (12) présente une unité de soupape de sortie (20), par laquelle le matériau d'impression (16) peut être délivré et qui est logée au moins partiellement dans le dispositif de mise à disposition de matériau (10) et s'appuie au moins partiellement sur celui-ci ou dans celui-ci ou assure l'étanchéité contre celui-ci, **caractérisée en ce que** l'unité de soupape de sortie (20) présente une soupape (100) qui s'ouvre et se ferme en fonction de la position de pivotement du dispositif de mise à disposition de matériau (10) et de l'appareil de stéréolithographie.

2. Dispositif de mise à disposition de matériau selon la revendication 1, **caractérisé en ce que** la soupape (100) est ouverte lorsque la cartouche de matériau (12) se trouve au-dessus de l'unité de soupape de sortie (20), et la cartouche de matériau (12) peut pivoter latéralement vers le bas.

3. Dispositif de mise à disposition de matériau selon la revendication 1 ou 2, **caractérisé en ce que** la vanne (100) est ouverte dans une position verticale de la cartouche de matériau (12) et fermée dans une position horizontale.

4. Dispositif de mise à disposition de matériau selon la revendication 1, 2 ou 3, **caractérisé en ce que** la vanne (100) présente une articulation avec un angle de pivotement d'au moins 70 degrés, en particulier de 90 degrés.

5. Dispositif de mise à disposition de matériau selon l'une des revendications précédentes, **caractérisé en ce que** la partie de l'unité de vanne reliée à la sortie de la cartouche de matériau peut pivoter avec la cartouche de matériau (12) et ce mouvement ferme la vanne (100).

6. Dispositif de mise à disposition de matériau selon l'une des revendications précédentes, **caractérisé en ce que**, dans la position verticale, la cartouche de matériau (12) est supportée la tête en bas et la vanne (100) est ouverte.

7. Dispositif de mise à disposition de matériau selon l'une des revendications précédentes, **caractérisé en ce que** la cartouche de matériau (12) avec l'unité de soupape de sortie (20) peut être retirée par l'intermédiaire d'un guide coulissant (58) et en particulier **en ce que**, dans la position verticale de la cartouche de matériau (12), le guide coulissant (58) est bloqué et une fermeture du dispositif de mise à disposition de matériau n'est possible, en raison du blocage mécanique, que lorsque la cartouche de matériau est à l'état couché.

8. Dispositif de mise à disposition de matériau selon l'une des revendications précédentes, **caractérisé en ce que** le dispositif de mise à disposition de matériau est entièrement fermé et étanche lorsque la cartouche de matériau (12) est insérée.

9. Dispositif de mise à disposition de matériau selon l'une des revendications précédentes, **caractérisé en ce que** la sortie (20) pénètre dans un bac (14) de matériau liquide sous pression (16) et se termine au niveau du liquide de ce bac pour réaliser un auto-nivellement.

10. Dispositif de mise à disposition de matériau selon l'une des revendications précédentes, **caractérisé en ce que** l'introduction et l'extraction de la cartouche de matériau (12) avec l'unité de soupape de sortie (20) dans et hors d'un cadre (22) du dispositif de mise à disposition de matériau (10) sont bloquées dans la position ouverte de la soupape (100) .

11. Dispositif de mise à disposition de matériau selon l'une des revendications précédentes, **caractérisé en ce que** la cartouche de matériau (12) et/ou la cuve (14) est conçue comme une pièce à usage unique et un cadre de réception du dispositif de mise à disposition de matériau (10) comme une pièce à usage multiple, où toutes les pièces sont étanches à la lumière chacune.

12. Dispositif de mise à disposition de matériau selon l'une des revendications précédentes, **caractérisé en ce qu'**une association 1 à 1 entre la cartouche de matériel (12) et le bac (14) est réalisée par un codage correspondant.

13. Dispositif de mise à disposition de matériau selon l'une des revendications précédentes, **caractérisé en ce qu'**il est prévu un ou plusieurs bacs (14) qui peuvent être utilisés selon le choix de l'utilisateur, où le codage sur le bac (14) correspond au codage sur la cartouche de matériel (12) et des codages différents les uns des autres ne correspondant pas les uns aux autres.

14. Dispositif de mise à disposition de matériau selon l'une des revendications précédentes, **caractérisé en ce que** le niveau de remplissage peut être réglé sur la base du signal de sortie d'un capteur qui détecte la hauteur du niveau de remplissage.

15. Dispositif de mise à disposition de matériau selon l'une des revendications précédentes, **caractérisé en ce qu'**il est prévu une fenêtre de support transparente dont la face supérieure peut être utilisée comme hauteur de référence.

16. Dispositif de mise à disposition de matériau selon la revendication 15, **caractérisé en ce que** la plaque de verre sert de base à un film (64) prévu en bas de la cuve (14) et tendu sur la plaque de verre (66).

17. Dispositif de mise à disposition de matériau selon la revendication 15 ou 16, **caractérisé en ce que** la face supérieure de la plaque de verre (66) et l'épaisseur du film (64) constituent la hauteur de référence lors de la construction ou du slicing dans le cadre du procédé de stéréolithographie.

18. Dispositif de mise à disposition de matériau selon l'une des revendications précédentes, **caractérisé en ce que**, lorsque le dispositif de mise à disposition de matériau est ouvert par le haut et que la cartouche de matériau (12) est libre, la cartouche de matériau (12) peut être remplacée à l'état couché, **en ce qu'**elle peut être retirée du guide coulissant avec l'unité de soupape de sortie.

19. Dispositif de mise à disposition de matériau selon l'une des revendications précédentes, **caractérisé en ce que** la sortie se termine exactement à l'horizontale et **en ce que** l'appareil de stéréolithographie est placé exactement à l'horizontale.

20. Appareil de stéréolithographie avec dispositif de mise à disposition de matériau, selon l'une des revendications précédentes, où un dispositif de mise à disposition de matériau (10) de l'appareil reçoit une cartouche de matériau (12) qui reçoit à son tour le matériau d'impression (16) et l'entoure de tous côtés, où il est prévu une unité de soupape de sortie (20), par laquelle le matériau d'impression (16) peut être délivré et qui est logée au moins partiellement dans le dispositif de mise à disposition de matériau (10) et s'appuie au moins partiellement sur celui-ci ou dans celui-ci ou assure l'étanchéité contre celui-ci, et en ce que l'unité de soupape de sortie (20) présente une soupape (100) qui s'ouvre et se ferme en fonction de la position de pivotement du dispositif de mise à disposition de matériau (10) et de l'appareil de stéréolithographie.
